# EUROPEAN PATENT APPLICATION

(11) **EP 4 711 932 A1**
(43) Date of publication of application: **18.03.2026**
(21) Application number: 24829997.6
(22) Date of filing: 22.03.2024
(51) Int. Cl.: G06F 11/20, G06F 11/14, G06F 11/07, G06F 11/30, G06N 3/098

(54) **FAULT PROCESSING METHOD AND RELATED DEVICE**

(30) Priority: 28.06.2023 CN 202310784685; 28.09.2023 CN 202311281352
(71) Applicant: Huawei Technologies Co., Ltd., Shenzhen, Guangdong 518129 (CN)
(72) Inventor: HAO, Ripei, Shenzhen, Guangdong 518129 (CN); CAI, Zhifang, Shenzhen, Guangdong 518129 (CN); SONG, Xin, Shenzhen, Guangdong 518129 (CN)
(74) Representative: Isarpatent
(86) International application number: PCT/CN2024/083152
(87) International publication number: WO 2025/001345

(57) **Abstract**

This application provides a fault processing method, applied to a training system. The training system includes a first chip on a host side and a plurality of second chips on a device side, and the first chip and the plurality of second chips are configured to collaboratively execute a training task. The training task includes a first subtask and a plurality of second subtasks, and execution of the second subtask depends on an execution result of the first subtask. The method includes: The first chip executes the first subtask. When a fault occurs, the first chip saves a fault file before a second chip in a normal state on the device side stops executing the second subtask. The first chip synchronizes the fault file to a rescheduled chip on the device side, so that the rescheduled chip continues to execute the second subtask. In the method, the first chip on the host side may not stop executing the second subtask. In this way, the execution result of the first subtask on the host side can be reused to recover the training task, to shorten recovery time of the training task, and improve recovery efficiency of the training task.

## Description

This application claims priorities to Chinese Patent Application No. 202310784685.2, filed with the China National Intellectual Property Administration on June 28, 2023 and entitled "FAULT RECOVERY METHOD FOR DISTRIBUTED MODEL TRAINING", and to Chinese Patent Application No. 202311281352.4, filed with the China National Intellectual Property Administration on September 28, 2023 and entitled "FAULT PROCESSING METHOD AND RELATED DEVICE", both of which are incorporated herein by reference in their entireties.

### TECHNICAL FIELD

This application relates to the field of artificial intelligence (artificial intelligence, AI) technologies, and in particular, to a fault processing method and apparatus, a scheduler, a chip, a computer-readable storage medium, and a computer program product.

### BACKGROUND

With continuous development of AI technologies, AI models (also referred to as models for short in some cases for ease of description) are used in more industries and fields, to implement intelligent and automated services. For example, in the e-commerce industry, more merchants use an AI customer service constructed based on AI models to replace a manual customer service, to provide pre-sales and after-sales consulting services. For another example, in a social network, a platform uses an AI model to replace manual reviewing of content released by a user, to reduce labor costs.

The AI model is a mathematical model that is constructed based on the AI technologies to predict unknown data. For example, the AI model may be a target detection model or an image classification model constructed based on a neural network. The AI model usually needs to be trained using a large amount of data. To improve training efficiency of the AI model, a distributed training method emerges.

In the distributed training method, a training task is distributed to a plurality of training nodes for execution, and the plurality of training nodes train the model in parallel. Executing a training task is a process of training a model by using a dataset, to obtain a parameter (for example, a weight) of the model. The plurality of training nodes may update a parameter of the model according to a synchronous update mechanism. The synchronous update mechanism means that an average value is calculated by accumulating gradients obtained by the training nodes, and the parameter of the model is updated based on the average value. When a training node, a training algorithm, or a network is faulty, the entire distributed training task is interrupted. As a quantity of training nodes increases, a possibility of interruption also increases. Therefore, a fault processing mechanism needs to be provided to recover the training task.

Currently, a mainstream fault processing solution in the industry requires a long period of time to recover a training task, efficiency is low, and is difficult to satisfy a service requirement.

### SUMMARY

This application provides a fault processing method. In the method, when a fault occurs, a second chip on a device side may stop executing a second subtask, and a first chip on a host side may not stop executing the second subtask. In this way, an execution result of a first subtask on the host side can be reused to recover a training task, to shorten recovery time of the training task, and improve recovery efficiency of the training task. This application further provides an apparatus, a scheduler, a chip, a training system, a computer-readable storage medium, and a computer program product corresponding to the foregoing processing method.

According to a first aspect, this application provides a fault processing method. The method is applied to a training system. The training system includes a first chip on a host side and a plurality of second chips on a device side, and the first chip and the plurality of second chips are configured to collaboratively execute a training task. The training task includes a first subtask and a plurality of second subtasks, and execution of the second subtask depends on an execution result of the first subtask.

Specifically, the first chip executes the first subtask. When a fault occurs, the first chip saves a fault file before a second chip in a normal state on the device side stops executing the second subtask. Then, the first chip synchronizes the fault file to a rescheduled chip on the device side, so that the rescheduled chip continues to execute the second subtask.

In the method, when a fault occurs, the second chip on the device side may stop executing the second subtask, and the first chip on the host side may not stop executing the first subtask. In this way, the execution result (for example, a compilation result, including but not limited to a compilation result of a computational graph) of the first subtask on the host side may be reused to recover the training task, to shorten recovery time of the training task and improve recovery efficiency of the training task.

In some possible implementations, the fault includes a recoverable chip fault or an unrecoverable node fault. The method supports implementation of a fine-grained recovery solution based on different fault types, and the fine-grained recovery solution can improve recovery efficiency of the training task as much as possible.

In some possible implementations, the fault is a recoverable chip fault, and the rescheduled chip on the device side includes a second chip that recovers to a normal state after a reset. In this way, the training task can be recovered on the original node without applying for an additional node resource. This improves resource utilization.

In some possible implementations, the training system includes a training node, and the training node includes the first chip and the plurality of second chips. That is, the training system may be in a single-machine multi-card architecture. The fault is a fault of a target chip in the plurality of second chips. Based on this, when synchronizing the fault file to the rescheduled chip on the device side, the first chip may synchronize the fault file to the target chip that recovers to a normal state after a reset. In this way, when the recoverable chip fault occurs on a single training node, the training task is recovered on the original node.

In some possible implementations, the fault is an unrecoverable node fault, and the rescheduled chip on the device side includes a newly added third chip. In this way, the training task can be recovered on a new node, to shorten interruption time of the training task as much as possible, and improve recovery efficiency of the training task.

In some possible implementations, the training system includes a first training node and a second training node, and each training node includes at least one first chip and at least one second chip. That is, the training system may be in a multi-machine multi-card architecture. The unrecoverable node fault occurs on the first training node, and the third chip belongs to a newly added third training node. Correspondingly, a first chip in the first training node may save the execution result of the first subtask, and a first chip in the third training node may load the execution result of the first subtask.

In the method, the execution result of the first subtask is cached, and then the cached execution result is loaded to the new node, so that the execution result is reused, to improve recovery efficiency of the training task.

In some possible implementations, the first subtask may be a compilation subtask (for example, compilation of a computational graph). The first chip does not stop executing the first subtask, so that compilation-free is implemented. Alternatively, the first chip in the first training node caches a compilation result, and the first chip in the newly added third training node loads the compilation result cached by the first chip in the first training node, so that the compilation result can be reused. In this way, recovery time of the training task is shortened, and recovery efficiency of the training task is improved.

In some possible implementations, the first chip may obtain the fault file from a memory, and synchronize the fault file to the rescheduled chip on the device side through a cluster communication interface. In this way, re-deserialization is not required, synchronization time is shortened, and fault recovery efficiency is improved.

In some possible implementations, the subtask is executed in a process or thread manner. According to the fault processing method in this application, a process or a thread on the device side may exit, a process or a thread on the host side may not exit, and the host side does not need to re-apply for a resource to repeatedly execute a same subtask. This further shortens recovery time of the training task, and improves recovery efficiency of the training task.

According to a second aspect, this application provides a fault processing method. The method is applied to a scheduler, the scheduler is used for fault processing when a fault occurs in a training system, the training system includes a first chip on a host side and a plurality of second chips on a device side, the first chip and the plurality of second chips are configured to collaboratively execute a training task, the training task includes a first subtask and a plurality of second subtasks, execution of the second subtask depends on an execution result of the first subtask, and the method includes:
performing fault detection on the training system; and
when it is detected that a fault occurs, indicating the first chip to save a fault file before a second chip in a normal state on the device side stops executing the second subtask, where the fault file is synchronized by the first chip to a rescheduled chip on the device side.

In the method, when detecting that a fault occurs, the scheduler indicates the first chip to save the fault file before the second chip in a normal state on the device side stops executing the second subtask. The second chip on the device side may stop executing the second subtask, and the first chip on the host side may not stop executing the second subtask. In this way, the execution result of the first subtask on the host side can be reused to recover the training task, to shorten recovery time of the training task, and improve recovery efficiency of the training task.

In some possible implementations, the fault is a recoverable chip fault, and the scheduler may further reset a faulty chip on the device side. The rescheduled chip on the device side includes a second chip that recovers to a normal state after a reset. This method supports a fine-grained recovery solution based on different fault types. For the recoverable chip fault, a hot reset can be performed online for recovery, and a training state is recovered by synchronizing a fault file with a normal chip.

In some possible implementations, the training system includes a training node, and the training node includes the first chip and the plurality of second chips. The fault is a fault of a target chip in the plurality of second chips, and the fault file is synchronized by the first chip to the target chip that recovers to a normal state after a reset. In this way, when the recoverable chip fault occurs on a single training node, the training task is recovered on the original node.

In some possible implementations, the fault is an unrecoverable node fault, and the rescheduled chip on the device side includes a newly added third chip. Correspondingly, the scheduler may further synchronize information about the newly added third chip to the second chip in a normal state. This helps establish a link between the second chips, and further helps recover the training task.

In some possible implementations, the training system includes a first training node and a second training node, and each training node includes at least one first chip and at least one second chip. The unrecoverable node fault occurs on the first training node. Correspondingly, the scheduler may synchronize the information about the third chip to at least one second chip in the second training node, where the information about the third chip includes at least one of address information and resource configuration information of a third training node to which the third chip belongs.

In the method, information such as an address and a resource configuration of the third chip is synchronized to the at least one second chip in the second training node, so that the third chip can recover execution of the second subtask as soon as possible, to improve recovery efficiency of the training task.

In some possible implementations, the subtask is executed in a process or thread manner. According to the method, a process or a thread on the device side may exit, a process or a thread on the host side may not exit, and the host side does not need to re-apply for a resource to repeatedly execute a same subtask. This further shortens recovery time of the training task, and improves recovery efficiency of the training task.

According to a third aspect, this application provides a fault processing apparatus. The apparatus is deployed on a first chip on a host side of a training system, the first chip and a plurality of second chips on a device side of the training system are configured to collaboratively execute a training task, the training task includes a first subtask and a plurality of second subtasks, execution of the second subtask depends on an execution result of the first subtask, and the apparatus includes:
a task execution module, configured to execute the first subtask;
a file saving module, configured to: when a fault occurs, save, by the first chip, a fault file before a second chip in a normal state on the device side stops executing the second subtask; and
a file synchronization module, configured to synchronize the fault file to a rescheduled chip on the device side, so that the rescheduled chip continues to execute the second subtask.

In some possible implementations, the fault includes a recoverable chip fault or an unrecoverable node fault.

In some possible implementations, the fault is a recoverable chip fault, and the rescheduled chip on the device side includes a second chip that recovers to a normal state after a reset.

In some possible implementations, the training system includes a training node, the training node includes the first chip and the plurality of second chips, and the fault is a fault of a target chip in the plurality of second chips.

The file synchronization module is specifically configured to:
synchronize the fault file to the target chip that recovers to a normal state after a reset.

In some possible implementations, the fault is an unrecoverable node fault, and the rescheduled chip on the device side includes a newly added third chip.

In some possible implementations, the training system includes a first training node and a second training node, each training node includes at least one first chip and at least one second chip, the unrecoverable node fault occurs on the first training node, the third chip belongs to a newly added third training node, and the apparatus further includes an execution result saving module deployed on a first chip in the first training node and an execution result loading module deployed on a first chip in the third training node.

The execution result saving module is configured to save the execution result of the first subtask.

The execution result loading module is configured to load the execution result of the first subtask.

In some possible implementations, the file synchronization module is specifically configured to:
obtain the fault file from a memory, and synchronize the fault file to the rescheduled chip on the device side through a cluster communication interface.

In some possible implementations, the subtask is executed in a process or thread manner.

According to a fourth aspect, this application provides a scheduler. The scheduler is used for fault processing when a fault occurs in a training system, the training system includes a first chip on a host side and a plurality of second chips on a device side, the first chip and the plurality of second chips are configured to collaboratively execute a training task, the training task includes a first subtask and a plurality of second subtasks, execution of the second subtask depends on an execution result of the first subtask, and the scheduler includes:
a fault detection module, configured to perform fault detection on the training system; and
a notification module, configured to: when it is detected that a fault occurs, indicate the first chip to save a fault file before a second chip in a normal state on the device side stops executing the second subtask, where the fault file is synchronized by the first chip to a rescheduled chip on the device side.

In some possible implementations, the fault is a recoverable chip fault, and the scheduler further includes:
a reset module, configured to reset a faulty chip on the device side.

The rescheduled chip on the device side includes a second chip that recovers to a normal state after a reset.

In some possible implementations, the training system includes a training node, the training node includes the first chip and the plurality of second chips, the fault is a fault of a target chip in the plurality of second chips, and the fault file is synchronized by the first chip to the target chip that recovers to a normal state after a reset.

In some possible implementations, the fault is an unrecoverable node fault, the rescheduled chip on the device side includes a newly added third chip, and the scheduler further includes:
a synchronization module, configured to synchronize information about the newly added third chip to the second chip in a normal state.

In some possible implementations, the training system includes a first training node and a second training node, each training node includes at least one first chip and at least one second chip, and the unrecoverable node fault occurs on the first training node.

The synchronization module is specifically configured to:
synchronize the information about the third chip to at least one second chip in the second training node, where the information about the third chip includes at least one of address information and resource configuration information of a third training node to which the third chip belongs.

In some possible implementations, the subtask is executed in a process or thread manner.

According to a fifth aspect, this application provides a chip. The chip includes a processor and a storage. The processor and the storage communicate with each other. The processor is configured to execute instructions stored in the storage, so that the chip performs the fault processing method according to any one of the first aspect or the implementations of the first aspect.

According to a sixth aspect, this application provides a scheduler. The scheduler includes a processor and a storage, and the storage stores computer-readable instructions. The processor executes the computer-readable instructions, so that the scheduler performs the fault processing method according to any one of the first aspect or the implementations of the first aspect.

According to a seventh aspect, this application provides a training system. The training system includes a first chip on a host side and a plurality of second chips on a device side. The first chip is configured to execute computer-readable instructions, to perform the fault processing method according to any one of the first aspect or the implementations of the first aspect.

According to an eighth aspect, this application provides a computer-readable storage medium. The computer-readable storage medium stores instructions, and the instructions instruct a computing device or a computing device cluster to perform the fault processing method according to any one of the first aspect or the implementations of the first aspect.

According to a ninth aspect, this application provides a computer program product including instructions. When the computer program product runs on a computing device or a computing device cluster, the computing device or the computing device cluster is enabled to perform the fault processing method according to any one of the first aspect or the implementations of the first aspect.

Based on the implementations provided in the foregoing aspects, this application may further combine technologies in this application to provide more implementations.

### BRIEF DESCRIPTION OF DRAWINGS

To describe the technical methods in embodiments of this application more clearly, the following briefly describes the accompanying drawings for describing embodiments.
FIG. 1A is a diagram of an architecture of a training system according to an embodiment of this application;
FIG. 1B is a diagram of an architecture of another training system according to an embodiment of this application;
FIG. 2A is a diagram of a fault processing solution according to an embodiment of this application;
FIG. 2B is a diagram of another fault processing solution according to an embodiment of this application;
FIG. 3 is a diagram of a hardware structure of a server according to an embodiment of this application;
FIG. 4 is a framework diagram of software deployed on a server according to an embodiment of this application;
FIG. 5 is a flowchart of a fault processing method according to an embodiment of this application;
FIG. 6 is a flowchart of a fault processing method according to an embodiment of this application;
FIG. 7 is a diagram of recovering a training task on an original node according to an embodiment of this application;
FIG. 8 is a diagram of recovering a training task on a new node according to an embodiment of this application;
FIG. 9 is a diagram of a structure of a fault processing apparatus according to an embodiment of this application; and
FIG. 10 is a diagram of a structure of another fault processing apparatus according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Artificial intelligence (artificial intelligence, AI), also referred to as machine intelligence, is specifically intelligence represented by a machine (for example, a computer) by imitating human thinking and behavior (for example, learning, reasoning, thinking, and planning). Artificial intelligence is usually to achieve a specific goal or complete a specific task by imitating human thinking and behavior based on knowledge. The knowledge may be from experience or data.

Deep learning (deep learning, DL) is a branch of AI. Specifically, a deep neural network model (also referred to as a deep learning model, which is also referred to as a model for short for ease of description in some cases) is used to process massive data, to learn knowledge (for example, a multiple nonlinear transformation structure) from the massive data, and process and analyze the data based on the knowledge. A trained deep learning model may be used in scenarios such as perception and decision-making in the AI field, for example, used in scenarios such as image recognition, speech recognition, natural language translation, and computer gaming.

A deep learning model has a large quantity of parameters, usually reaching a scale of hundreds of billions or trillions. For example, a large model in the natural language processing (natural language processing, NLP) field can have hundreds of billions parameters. Such a large-scale deep learning model usually requires a large dataset for training. A typical training manner is distributed training.

Distributed training may be performed by a training system. The training system includes a first chip on a host (host) side and a plurality of second chips on a device (device) side. The first chip may be a central processing unit (central processing unit, CPU), also referred to as a central processor. The host side may include not only the CPU, but also a host memory. The second chip may be an external processing unit, and is used to assist the CPU in completing a task, to implement computing acceleration. Therefore, the second chip may also be referred to as an accelerator card or an accelerator. The second chip may include a neural processing unit (neural processing unit, NPU) or a graphics processing unit (Graphics Processing Unit, GPU). Different types of processors/processing units may implement different types of instruction set architectures. Similar to the host side, the device side may further include a device memory. In some examples, the device memory may be integrated with the second chip on the device side.

The training system may use a single-machine multi-card architecture or a multi-machine multi-card architecture to implement distributed training. It should be noted that in the foregoing x-machine x-card, the "machine" represents a host, and the "card" represents a device such as an acceleration card. The following describes a system architecture of a training system with reference to the accompanying drawings.

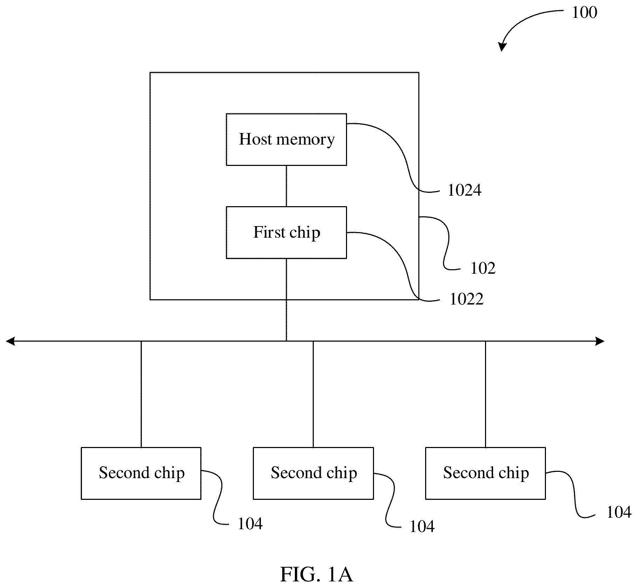

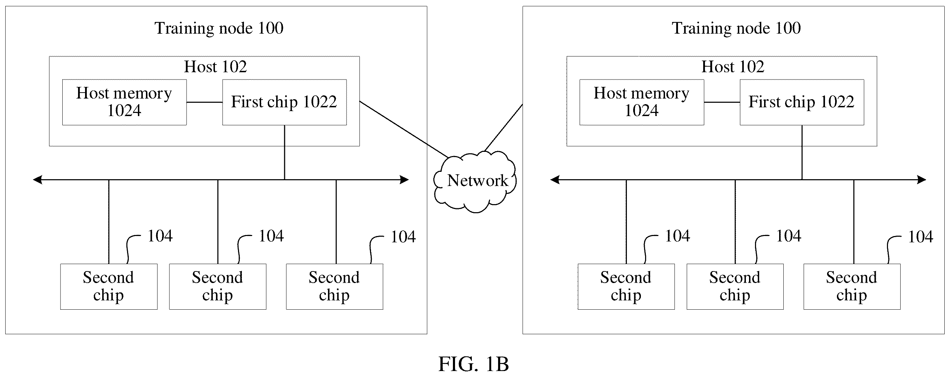

Refer to diagrams of architectures of training systems shown in FIG. 1A and FIG. 1B. In FIG. 1A, the training system may be one training node, and the training node 100 includes a host 102 and a plurality of devices 104. The host 102 includes a first chip 1022 and a host memory 1024, and the device 104 may be a second chip. In FIG. 1B, the training system may include a plurality of training nodes 100, for example, include a first training node and a second training node. Each training node 100 includes a host 102 and at least one device 104. The host 102 includes a first chip 1022 and a host memory 1024, and the device 104 may be a second chip.

The first chip 1022 may be a CPU, and the second chip may be an NPU or a GPU. The first chip 1022 and the second chip may be connected through a bus. The first chip 1022 and a plurality of second chips may collaboratively complete a training task. For example, the training task may be split into a plurality of subtasks, and different chips execute different subtasks. Based on this, the training task is also referred to as a distributed training task.

It should be noted that the system architectures shown in FIG. 1A and FIG. 1B are merely examples. Another architecture may also be used in another possible implementation of embodiments of this application. For example, the host 102 may also include a plurality of CPUs, and the plurality of CPUs may be connected to form a mesh (mesh).

The training system may update a parameter of a model by using an iteration method, to implement model training. In each iteration (iteration), a parameter of the model is updated once. One iteration may also be referred to as one train step (train step), which is referred to as a step for short. A quantity of samples used in each iteration is referred to as a batch size (batch size). In a training process, a process in which each piece of sample data in a dataset (for example, a training set) is used once is referred to as an epoch (epoch). For ease of understanding, the following uses an example for description. In this example, a training set includes 1000 pieces of sample data, and a batch size may be 100. In this case, 100 pieces of sample data may be used in one iteration, and training of one epoch is completed by performing 10 iterations on the 1000 pieces of sample data in the training set.

In a distributed training mechanism, a parameter of a model may be updated between training nodes (or between chips used for training) according to a synchronous update mechanism. The synchronous update mechanism means that an average value is calculated by accumulating gradients obtained by the training nodes (or the chips), and the parameter of the model is updated based on the average value. Compared with an asynchronous update mechanism in which each training node updates a parameter of a model based on a gradient of each training node, the synchronous update mechanism can ensure stable decrease in loss (loss), and avoid a large fluctuation.

The synchronous update mechanism binds computation and communication with each gradient synchronously. In a case in which the synchronous update mechanism is used, when a training node, a training algorithm, or a network is faulty, the entire distributed training task is interrupted. As a quantity of training nodes increases, a possibility of interruption increases. Therefore, a related technology provides a solution of recovering a training task by backing up a fault file.

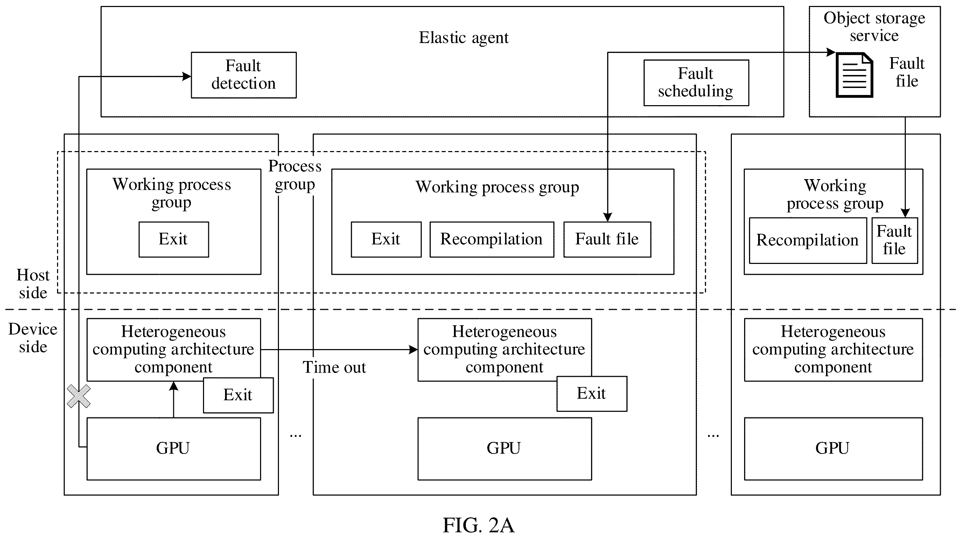

As shown in FIG. 2A, a typical fault processing solution is that an elastic agent (elastic agent) performs fault detection. After detecting a fault, the elastic agent (elastic agent) indicates a process corresponding to a working process group in a same process group (process group) to stop, and re-initializes a cluster. A training task creates a new process group on a non-faulty cluster node, loads a periodic fault file, for example, a checkpoint (checkpoint, CKPT) file, and continues the training task based on the CKPT file. This prevents a catastrophic fault caused by server maintenance or a network problem and prevents a loss of a training progress.

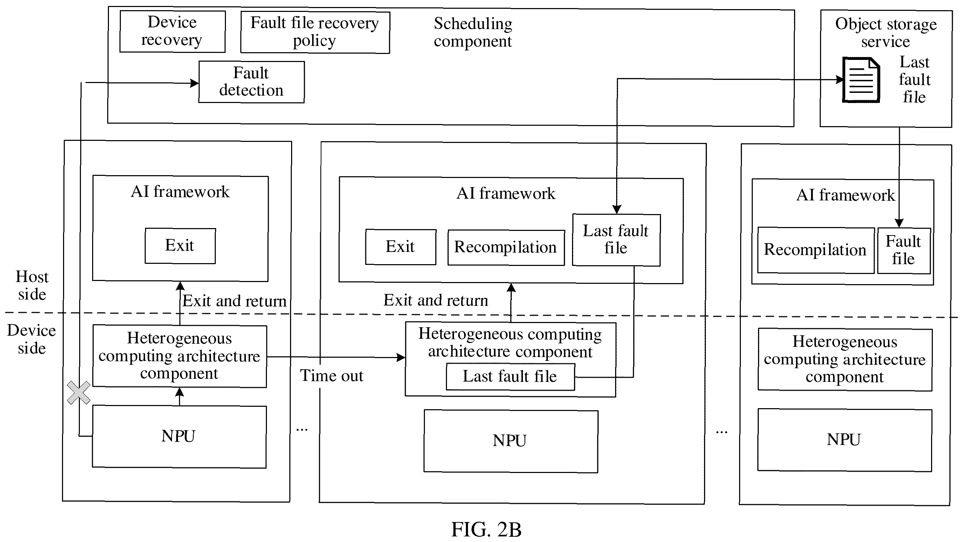

As shown in FIG. 2B, another typical fault processing solution is to schedule a component to perform fault detection. A detected fault type includes a chip fault and a node fault (including a parameter plane fault, such as a cluster communication fault). After a fault is detected, a node on which the fault occurs is isolated, and a training process is stopped. An AI framework saves a last CKPT file (a CKPT file existing when the fault occurs, also referred to as a breakpoint CKPT file). The training task may be rescheduled to a non-faulty cluster node, the last CKPT file is loaded, and the training task continues.

However, in the foregoing solution, after a fault is detected, regardless of a type of the fault, all processes exit (also referred to as stopping, specifically, a file descriptor opened by a process is closed, to release a resource occupied by the process). As a result, when different types of faults occur in the training system, the process needs to be restarted to execute a corresponding task, for example, recompilation. This greatly affects recovery efficiency of a training task.

In view of this, this application provides a fault processing method. The method is applied to a training system. The training system includes a first chip on a host side and a plurality of second chips on a device side, the first chip and the plurality of second chips are configured to collaboratively execute a training task, the training task includes a first subtask and a plurality of second subtasks, and execution of the second subtask depends on an execution result of the first subtask. For example, the first subtask may be a subtask of compiling a computational graph, and the second subtask may be a subtask of executing an operator sequence based on a compilation result of the computational graph.

Specifically, the first chip executes the first subtask. When a fault occurs, the first chip saves a fault file before a second chip in a normal state on the device side stops executing the second subtask. Then, the first chip synchronizes the fault file to a rescheduled chip on the device side, so that the rescheduled chip continues to execute the second subtask.

In the method, when a fault occurs, the second chip on the device side may stop executing the second subtask, and the first chip on the host side may not stop executing the first subtask. In this way, the execution result (for example, a compilation result, including but not limited to a compilation result of a computational graph) of the first subtask on the host side may be reused to recover the training task, to shorten recovery time of the training task and improve recovery efficiency of the training task. A subtask may be executed by using a process or a thread. In other words, according to the fault processing method in this application, a process or a thread on the device side may exit, a process or a thread on the host side may not exit, and the host side does not need to re-apply for a resource to repeatedly execute a same subtask. This further shortens recovery time of the training task, and improves recovery efficiency of the training task.

In addition, this method supports a fine-grained recovery solution based on different fault types. For a recoverable chip fault, a hot reset can be performed online for recovery, and a training state is recovered by synchronizing a fault file with a normal chip. For an unrecoverable node fault, only a subtask on a faulty node is stopped (a process or a thread is stopped) and the subtask is recovered on a new training node. A training state is synchronized by synchronizing a fault file with a normal training node.

The fault processing method in this application may be applied to various distributed training scenarios. For example, the fault processing method may be applied to a scenario of performing distributed training on an image recognition model. Different network structures (for example, different subnetworks or different network layers) of the image recognition model may be trained by different training nodes or a plurality of second chips in one training node. When a training node is faulty or a second chip (some second chips) is faulty, the second chip on the device side may stop executing the second subtask, and the first chip on the host side may not stop executing the second subtask. The first chip saves a fault file before the second chip in a normal state stops executing the second subtask, and then synchronizes the fault file to a rescheduled chip on the device side, so that the rescheduled chip continues to execute the second subtask.

The fault processing method may also be applied to a scenario of performing distributed training on a text recognition model. Different network structures of the text recognition model may be trained by different training nodes or second chips. For a fault processing mechanism used when a fault occurs, refer to the scenario of performing distributed training on the image recognition model. Details are not described herein.

FIG. 1A and FIG. 1B describe a framework of the training system. The following describes a hardware structure and software logic of the training system by using a single-machine multi-card architecture as an example.

A training system in the single-machine multi-card architecture may be a server, and a training system in a multi-machine multi-card architecture may be a server cluster. A server cluster includes a plurality of servers. For details about a hardware structure of the server cluster, refer to a hardware structure of a single server. Specifically, a user may purchase or lease a server, and the server may be a cloud server or a physical server.

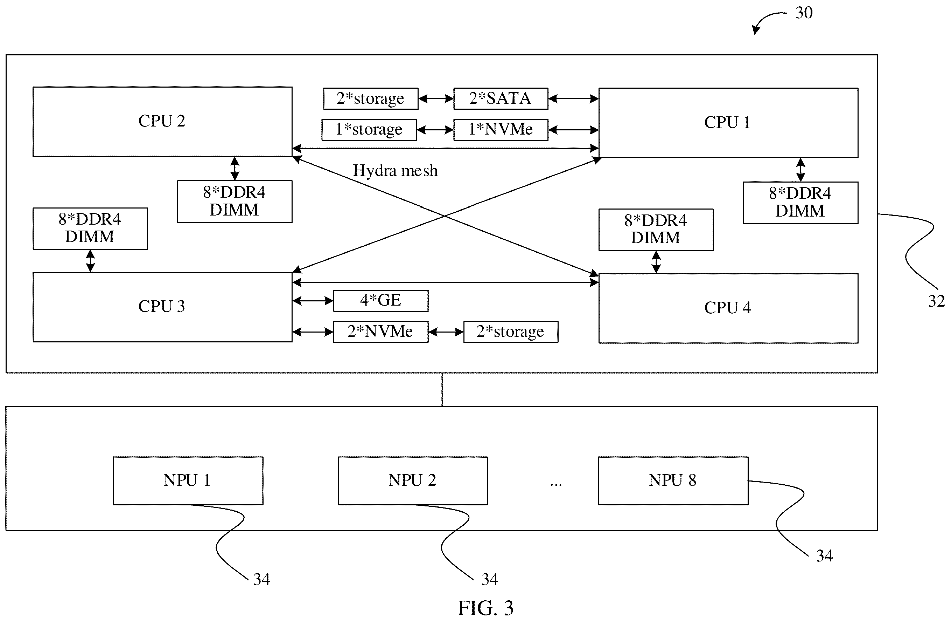

Refer to a diagram of a hardware structure of a server shown in FIG. 3. The server 30 includes a host 32 and a device 34. The host 32 is connected to the device 34. The host 32 includes a processor and a memory (that is, a host memory). The processor may be a CPU, and the memory may be a dual in-line memory module (Dual In-line Memory Module, DIMM). The DIMM may be specifically a double data rate (double data rate, DDR) type. For example, the memory may be a DDR4 DIMM. In the example in FIG. 3, the host 32 includes four CPUs and four DDR4 DIMM groups, each CPU is connected to one DDR4 DIMM group, and each DDR4 DIMM group includes eight DDR4 DIMMs. A plurality of CPUs of the host 32 may be connected to form a hydra mesh.

Optionally, the host 32 further includes an interface, for example, one or more of a serial advanced technology attachment (Serial Advanced Technology Attachment, SATA) interface, a nonvolatile memory express (Non-Volatile Memory express, NVMe) interface, and a gigabit Ethernet (Gigabit Ethernet, GE) interface. The host 32 may further include a storage. The storage may include a storage that supports SATA or a storage that supports NVMe, for example, a mechanical hard disk drive that supports SATA or a solid state drive (solid state drive, SSD) that supports NVMe.

The device 34 includes an accelerator card. In the example in FIG. 3, the accelerator included in the device 34 may be an NPU. FIG. 3 is described by using an example in which the device 34 includes eight NPUs. In another possible implementation of embodiments of this application, the device 34 may include more acceleration cards, for example, more types of acceleration cards or a larger quantity of acceleration cards.

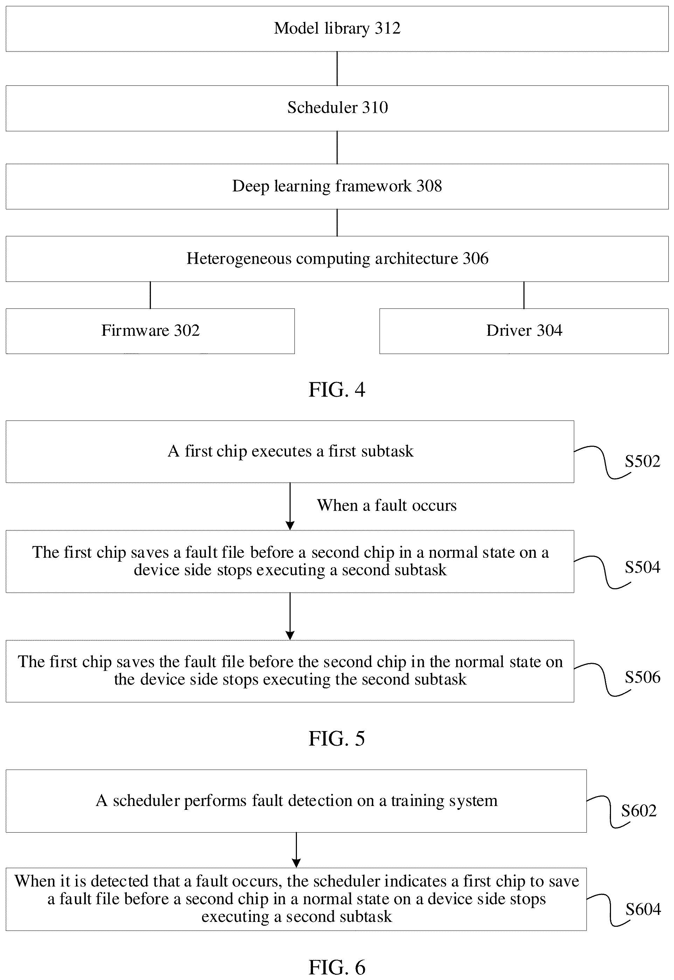

Then, refer to a framework diagram of software deployed on a server shown in FIG. 4. The user may install firmware 302 and a driver 304 on the server 30. The firmware 302 is usually a program written to a read-only memory, and may directly control hardware, interact with the hardware, and check whether the hardware has any error. The driver 304 is specifically a small block of code added to an operating system, and includes information about hardware. When a computer program requests to interact with hardware, the driver 304 may act as a converter of instructions between the hardware and a program using the hardware. For example, the firmware 302 may control the device 34, interact with the device 34, and check whether the device 34 has any error, and the driver 304 may act as a converter of instructions between the device 34 and a program using the device 34.

Further, when a hardware architecture of the server 30 uses a heterogeneous computing architecture (including a computing architecture of processing units that use different types of instruction sets), the user may further install a heterogeneous computing framework 306 on the server 30. In a distributed training scenario, the heterogeneous computing framework 306 may be a compute architecture for neural networks (Compute Architecture for Neuro Networks, CANN). The CANN provides multi-layer programming interfaces to help the user quickly construct an AI application. The AI application is an application constructed based on an AI model obtained through training. It should be noted that the heterogeneous computing framework 306 is an optional framework. The server 30 may also perform the fault processing method in embodiments of this application even if the foregoing framework is not installed on the server. A function of the foregoing framework is to improve efficiency of constructing the AI application.

The user may then install a deep learning framework 308 on the server 30. The deep learning framework 308 is used to compile a computational graph of a model, and automatically implement gradient computation in the computational graph. In this way, when distributed training is performed, a graph compilation result (for example, an operator sequence) may be executed, to perform related computation of distributed training. Based on different compilation modes, deep learning frameworks can be classified into a framework that supports static compilation and a framework that supports dynamic compilation. The user may choose to install one or more deep learning frameworks 308 on the server 30 based on a service requirement. In some embodiments, the deep learning framework 308 may not be installed on the server 30. In this case, the server 30 may implement a model from scratch by using a programming language such as Python.

The user may also install a scheduler 310 on the server 30. The scheduler 310 is configured to schedule a training task, to implement distributed training. The scheduler 310 may be a distributed scheduling component (a distributed scheduling framework) or an AI development platform. In some embodiments, the distributed scheduling component or the AI development platform may be a self-developed component or development platform, or may be a third-party distributed scheduling component or a third-party AI development platform.

Further, the user may deploy a model library 312 on the server 30. The model library 312 includes AI models implemented by using a unified framework, and the AI models have standardized parameters and APIs. The AI model includes a configuration item that can be reused, and the foregoing configuration item that can be reused is defined in the unified framework. In this way, configuration work for the AI model can be reduced.

The scheduler 310 may start a training task on a training node, training code may be downloaded from the model library 312, and a configuration file is read from the training code downloaded from the model 312. When the training node is faulty or one or more second chips (for example, an NPU) in the training node are faulty, when it is detected that a fault occurs, the scheduler 310 may indicate a first chip (for example, a CPU) to save a fault file before a second chip in a normal state on a device side stops executing a second subtask. The fault file is synchronized by the first chip to a rescheduled chip on the device side.

The scheduler 310 may be provided for the user in a form of a code package, and is installed or deployed by the user. Alternatively, the scheduler 310 may be provided for the user in a form of a cloud service. Specifically, a cloud service provider may provide an application programming interface (application programming interface, API) used for fault processing, and a training system may invoke the foregoing API to implement the fault processing method in this application.

To make the technical solutions of this application clearer and easier to understand, the following describes the fault processing method in this application with reference to the accompanying drawings.

Refer to a flowchart of a fault processing method shown in FIG. 5. The method is applied to a training system, and the training system includes a first chip on a host side and a plurality of second chips on a device side. The first chip and the plurality of second chips are configured to collaboratively execute a training task, and the training task includes a first subtask and a plurality of second subtasks. Execution of the second subtask depends on an execution result of the first subtask. For example, the first subtask may be a compilation subtask, and the execution result of the first subtask may be a compilation result. The second subtask is a subtask for executing an operator sequence (kernel sequence). Execution of the operator sequence depends on the compilation result on the host side. The method includes the following steps.

S502: The first chip executes the first subtask. When a fault occurs, S504 is performed.

The first subtask is a subtask of executing host-side logic in the training task. The training task is specifically cyclically executing a computational graph of a model. A computational graph is an advanced representation that provides a global view of operators without specifying implementation details. To reuse computing resources as much as possible, improve computing efficiency, and shorten model training time, compilation optimization needs to be performed on the computational graph. Compilation optimization may include performing high-level data writing (high-level data writing) to generate an optimized computational graph, then performing operator-level optimization to generate efficient code for a fusion operator in the computational graph, where the operator is declared by a tensor expression language (tensor expression language), then searching for optimal code of the operator in a potential optimization set by using an overhead model, and packaging the generated code into a deployable module, for example, a kernel sequence. The foregoing compilation optimization process may be executed on the host side, and the kernel sequence may be executed on the device side. Based on this, the first subtask may include a compilation optimization subtask (also referred to as a compilation subtask). The second subtask may include a subtask for executing the kernel sequence.

When the computational graph of the model is executed cyclically, a data set usually needs to be read for data preprocessing on data in the data set. The data preprocessing operation varies according to a data type of the dataset. For example, the dataset includes image data, and the data preprocessing operation may include cropping, scaling, and rotation. For another example, the dataset includes text data, and the data preprocessing operation may include word-level tokenization. The foregoing data preprocessing may be performed on the host side. Correspondingly, the first subtask may further include a data preprocessing subtask.

The first chip may execute the first subtask by using a process or a thread. The process or the thread is an application program running in a memory. The process is an encapsulation of a runtime program, and is a basic unit for resource scheduling and allocation. The thread usually relies on the process, and is used to implement concurrency in the process. The process has an independent memory, and the thread shares the memory of the process. For example, the first subtask is a compilation optimization subtask, and the first chip may execute the compilation optimization subtask by using one or more processes. In some possible implementations, the first chip may alternatively execute the compilation optimization subtask by using one or more threads.

S504: The first chip saves a fault file before a second chip in a normal state on the device side stops executing the second subtask.

The fault that occurs in the training system may be a recoverable chip fault or an unrecoverable node fault. The recoverable chip fault is a chip fault that can be recovered by a hot reset. The unrecoverable node fault is a fault that is difficult to recover on an original node. The unrecoverable node fault may include but is not limited to a fault of all chips or a parameter plane fault on the device side of the training node and the parameter plane fault may be a cluster communication fault.

The training system includes the plurality of second chips. Therefore, when a second chip is faulty, the first chip may save the fault file before the second chip in a normal state stops executing the second subtask. In some possible implementations, for a multi-machine multi-card training system, if a recoverable chip fault or an unrecoverable node fault occurs on a training node in the training system, a first chip in a normal node (a training node that is not faulty) in the training system may save a fault file before a second chip in the normal node stops executing a subtask. During specific implementation, the first chip in the normal node invokes an interface of a heterogeneous computing architecture component by using an AI framework (for example, a deep learning framework), so that the heterogeneous computing architecture component exits, a process or a thread based on the heterogeneous computing architecture component is stopped, and execution of the second subtask is stopped. Before execution of the second subtask is stopped, the AI framework may save the fault file. In some other possible implementations, for a single-machine multi-card training system, if an unrecoverable chip fault occurs on a training node, a first chip in the training node may save a fault file before a second chip that is not faulty in the node stops executing the second subtask. In some possible implementations, execution of the first subtask may not be stopped. In other words, a process or a thread used to execute the first subtask may not exit.

When storing the fault file, the first chip may read the fault file from the device side, and save the fault file in a memory on the host side, without persisting the fault file. In other words, the first chip may not flush data of the fault file to a disk. For example, the first chip does not write the fault file into an object storage service (Object Storage Service, OBS) or an open computing kit (Open Computing Kit, OCK). Further, when saving the fault file, the first chip may save a last fault file, for example, a last CKPT file (also referred to as a breakpoint CKPT), to avoid a loss of a training progress.

S506: The first chip synchronizes the fault file to a rescheduled chip on the device side, so that the rescheduled chip continues to execute the second subtask.

When the training task is interrupted due to the fault, the training task may be rescheduled to a chip in a normal state, and the chip is a rescheduled chip. The first chip synchronizes the fault file to the rescheduled chip, so that the rescheduled chip continues to execute the second subtask, to recover the training task.

For the recoverable chip fault, the rescheduled chip may be a second chip that recovers to a normal state after a reset. For example, the training system is a training node in a single-machine multi-card architecture, the training node includes the first chip and the plurality of second chips, and a target chip in the plurality of second chips is faulty. The rescheduled chip may be the target chip that recovers to a normal state after a reset. Correspondingly, the first chip may synchronize the fault file to the second chip (for example, the target chip) that recovers to a normal state after a reset.

For the unrecoverable node fault, the rescheduled chip may be a newly added third chip. For example, the training system includes a first training node and a second training node, and each training node includes at least one first chip and at least one second chip. When the unrecoverable node fault occurs on the first training node, the training task may be rescheduled to a newly added third training node, and the third chip belongs to the newly added third training node. Correspondingly, the first chip may synchronize the fault file to the third chip (or the third training node).

It should be noted that a first chip in the first training node may further store the execution result of the first subtask, for example, cache a compilation result. A first chip in the third training node may load the execution result of the first subtask and does not need to perform recompilation.

When the fault file is saved in a memory (for example, a host memory), the first chip may read the fault file from the memory, and then synchronize the fault file to the rescheduled chip on the device side through a cluster interface. Model information (for example, a model weight) is no longer serialized or deserialized using a CKPT. This avoids impact of a model scale, input/output (input/output, I/O), and bandwidth on training task recovery. Instead, point-to-point state synchronization is performed by using a cluster mechanism.

When the first chip saves the last fault file, for example, the last CKPT file, the first chip may synchronize a training status (or a training progress) at a fault moment, to avoid a loss of the training process caused by a periodic CKPT.

It can be learned from the foregoing content description that in the fault processing method in this application, when a fault occurs, the second chip on the device side may stop executing the second subtask, and the first chip on the host side may not stop executing the second subtask. In this way, the execution result (for example, the compilation result, including but not limited to the compilation result of the computational graph) of the first subtask on the host side may be reused to recover the training task, to shorten recovery time of the training task and improve recovery efficiency of the training task.

The foregoing describes the fault processing method from a perspective of the first chip, and the following describes the fault processing method in this application from a perspective of a scheduler.

Refer to a flowchart of a fault processing method shown in FIG. 6. The method is applied to a scheduler. The scheduler is used for fault processing when a fault occurs in a training system. The training system includes a first chip on a host side and a plurality of second chips on a device side. The first chip and the plurality of second chips are configured to collaboratively execute a training task. The training task includes a first subtask and a plurality of second subtasks. Execution of the second subtask depends on an execution result of the first subtask. The method includes the following steps.

S602: The scheduler performs fault detection on the training system.

Specifically, the scheduler may perform fault detection on the second chip in the training system or on a training node in which the second chip is located. Specifically, the scheduler may perform fault detection on the second chip by using a heartbeat packet. The second chip in the training system may periodically send a heartbeat packet to the scheduler, and the scheduler determines, according to a receiving status of the heartbeat packet, whether the second chip is faulty. For example, if the scheduler does not receive the heartbeat packet from the second chip in N consecutive periods, it indicates that the second chip or the node in which the second chip is located is faulty. The scheduler may determine a fault type based on a receiving status of a heartbeat packet of another second chip in the same training node.

For K second chips in a same training node, if the scheduler does not receive heartbeat packets from the K second chips in the training node, for example, does not receive the heartbeat packets from the K second chips in N consecutive periods, the scheduler may determine that the training node is faulty. For K second chips in a same training node, if the scheduler does not receive heartbeat packets from several second chips, but receives heartbeat packets from other second chips, the scheduler may determine that a second chip from which a corresponding heartbeat packet is not received is faulty.

It should be noted that the heartbeat packet is merely an implementation of performing fault detection on the training system. In another possible implementation of this embodiment of this application, the scheduler may implement fault detection in another manner. For example, the scheduler may perform fault detection on the second chip by reading state code of the second chip.

S604: When it is detected that a fault occurs, the scheduler indicates the first chip to save a fault file before a second chip in a normal state on the device side stops executing the second subtask.

The fault file is synchronized by the first chip to a rescheduled chip on the device side. In this way, the rescheduled chip can continue to execute the second subtask based on the fault file synchronized by the first chip.

In some possible implementations, for a recoverable chip fault, the scheduler may further reset a faulty chip on the device side, for example, perform a hot reset online. Correspondingly, the rescheduled chip on the device side includes a second chip that recovers to a normal state after a reset.

In some possible implementations, for an unrecoverable node fault, the rescheduled chip on the device side includes a newly added third chip. The scheduler may synchronize information about the newly added third chip to the second chip in a normal state. The information about the third chip is used to establish a link to another second chip that participates in training. During specific implementation, the training system includes a first training node and a second training node, each training node includes at least one first chip and at least one second chip, and the unrecoverable node fault occurs on the first training node. The training task may be rescheduled to a third training node. The third chip is a device-side chip in the third training node. The scheduler may synchronize the information about the third chip to the at least one second chip in the second training node. The information about the third chip includes at least one of address information and resource configuration information of the third training node to which the third chip belongs. The address information of the third training node may be an IP address of the third training node, or another address that can be used for link establishment. The resource configuration information may be a rank table of the third chip, and the rank table records a sequence number of the third chip occupied by a process or a thread for executing the subtask.

It can be learned from the foregoing content description that in the fault processing method of this application, when detecting that a fault occurs, the scheduler indicates the first chip to save the fault file before the second chip in a normal state on the device side stops executing the second subtask. The second chip on the device side may stop executing the second subtask, and the first chip on the host side may not stop executing the second subtask. In this way, the execution result of the first subtask on the host side can be reused to recover the training task, to shorten recovery time of the training task, and improve recovery efficiency of the training task.

The foregoing describes the fault detection method in this application from perspectives of the first chip and the scheduler. The following describes the fault processing method in this application with reference to a specific application scenario.

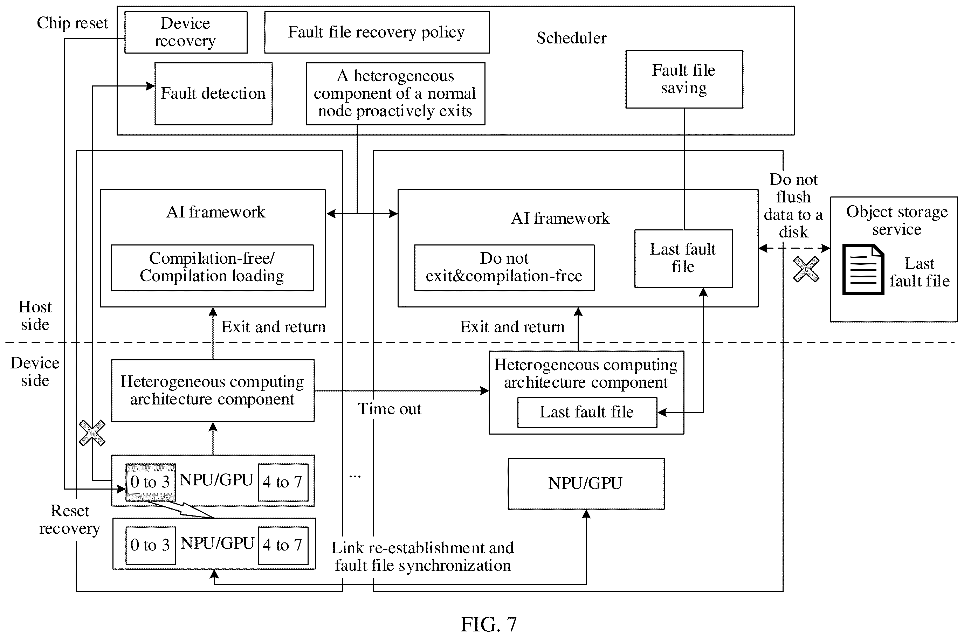

First, refer to a diagram of a scenario in which a training task is recovered on an original node shown in FIG. 7. As shown in FIG. 7, a training system includes a plurality of training nodes, and the training nodes include a first chip on a host side and a second chip (for example, an NPU/a GPU) on a device side. FIG. 7 is described by using an example in which there are eight second chips on a device side of each training node. When a recoverable chip fault occurs on second chips whose sequence numbers are 0 to 3 in a training node, the training task may be recovered on an original node.

A faulty training node is referred to as an abnormal node, and a node that is not faulty is referred to as a normal node. Corresponding operations are separately performed on the abnormal node and the normal node, to recover the training task on the original node.

For the abnormal node, a distributed scheduling framework (for example, a scheduler) deployed on the host side detects a chip fault, and resets faulty chips, for example, second chips (with ranks 0 to 3). The chip fault or chip reset may trigger a heterogeneous computing architecture component on the device side to exit. Correspondingly, a process on the device side may exit, and execution of the second subtask is stopped. A process corresponding to an AI framework on the host side does not exit. In this case, a computational graph does not need to be recompiled, and the chip is reset and the heterogeneous computing architecture component exits. The AI framework on the host side detects that the second chip is restored to the normal state after a reset, and may trigger a link establishment procedure, to re-establish a link to a normal node. For example, the link may be re-established by using a collective communication library. Then, the AI framework on the host side executes the computational graph again and waits until synchronization of the fault file completes. When synchronization completes, the abnormal node can continue the training task. For example, the second chip in the abnormal node may continue to execute the second subtask.

For the normal node, the distributed scheduling framework deployed on the host side may indicate the AI framework to invoke an interface of a heterogeneous computing architecture component, so that the heterogeneous computing architecture component exits, a process or a thread based on the heterogeneous computing architecture component is stopped, and execution of the second subtask is stopped. The AI framework saves a fault file before the process or the thread based on the heterogeneous computing architecture component is stopped (execution of the second subtask is stopped). After the fault file is saved, the heterogeneous computing architecture component can quickly exit. The process or the thread corresponding to the AI framework does not exit. In this case, recompilation is not required. The AI framework on the host side detects that the chip is in a normal state and a link can be re-established. Then, the AI framework executes the computational graph again. The AI framework synchronizes the fault file to the recovered node through a cluster communication interface according to a fault file recovery policy. The normal node can continue the training task.

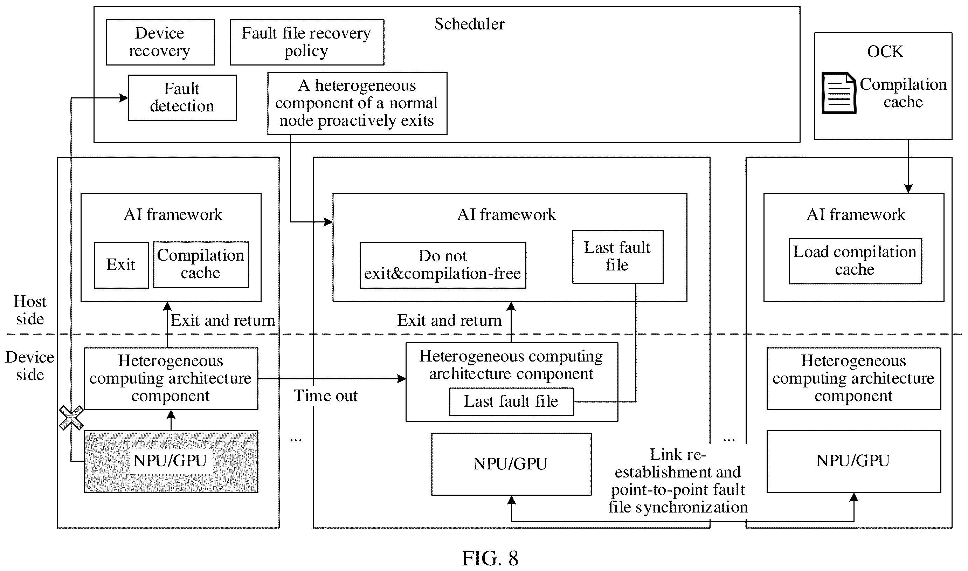

Then, refer to a diagram of a scenario in which a training task is recovered on a new node shown in FIG. 8. As shown in FIG. 8, a training system includes a plurality of training nodes, and the training nodes include a first chip on a host side and a second chip (for example, an NPU/a GPU) on a device side. FIG. 8 is described by using an example in which there are eight second chips on a device side of each training node. When an unrecoverable node fault occurs on a training node (all second chips in the training node are faulty), the training task may be recovered on a new node.

An abnormal node, a normal node, and the new node separately perform corresponding operations, to recover the training task on the new node.

For the abnormal node, a distributed scheduling framework detects a fault, a heterogeneous computing architecture component can exit. An AI framework can cache a compilation result based on a returned value (an abnormal returned value) of the exit of the heterogeneous computing architecture component. Then, a process of the AI framework can exit.

For the normal node, the distributed scheduling framework indicates the AI framework to invoke an interface of a heterogeneous computing architecture component, so that the heterogeneous computing architecture component exits. Before the heterogeneous computing architecture component exits, the AI framework saves a fault file on the host side. After the file is saved, the heterogeneous computing architecture component can quickly exit. A process or a thread based on the heterogeneous computing architecture component can exit. Execution of the second subtask is stopped. The AI framework on the host side does not exit and does not need to perform recompilation. The AI framework on the host side detects that the chip is in a normal state and a link can be re-established. Then, the AI framework executes a computational graph again. The AI framework synchronizes the fault file to a recovered node through a cluster communication interface according to a fault file recovery policy. The normal node can continue the training task.

For the new node, the distributed scheduling framework synchronizes IP and a rank table of the new node to each container group POD in each cluster. The AI framework obtains the IP of the new node and updates the rank table. Then, the AI framework loads the compilation result cached on the abnormal node. For example, an OCK is used to accelerate loading of the compilation result cached on the abnormal node. Then, the AI framework detects that the chip is in a normal state and a link is re-established. Then, the AI framework can execute the computational graph again and wait until synchronization of the fault file completes. After the fault file synchronization is complete, the new node can continue the training task.

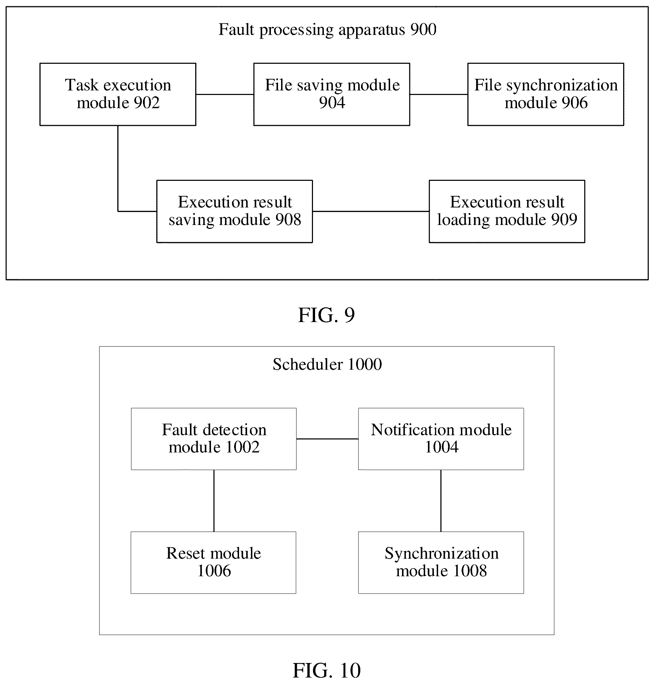

Based on the foregoing fault processing method, this application further provides a fault processing apparatus. As shown in FIG. 9, a fault processing apparatus 900 is deployed on a first chip on a host side of a training system, the first chip and a plurality of second chips on a device side of the training system are configured to collaboratively execute a training task, and the training task includes a first subtask and a plurality of second subtasks. Execution of the second subtask depends on an execution result of the first subtask. The fault processing apparatus 900 includes:
a task execution module 902, configured to execute the first subtask;
a file saving module 904, configured to: when a fault occurs, save, by the first chip, a fault file before a second chip in a normal state on the device side stops executing the second subtask; and
a file synchronization module 906, configured to synchronize the fault file to a rescheduled chip on the device side, so that the rescheduled chip continues to execute the second subtask.

For example, the task execution module 902, the file saving module 904, and the file synchronization module 906 may be implemented by using hardware or software.

When being implemented by software, the task execution module 902, the file saving module 904, and the file synchronization module 906 may be application programs running on a computing device, for example, a computing engine. The application programs may also be virtualized by using a virtualization service to provide a service for a user. The virtualization service may include a virtual machine (virtual machine, VM) service, a bare-metal server (bare-metal server, BMS) service, and a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by hardware, the task execution module 902, the file saving module 904, and the file synchronization module 906 may include at least one computing device, for example, a server. Alternatively, the task execution module 902, the file saving module 904, and the file synchronization module 906 may also be devices implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof.

In some possible implementations, the fault includes a recoverable chip fault or an unrecoverable node fault.

In some possible implementations, the fault is a recoverable chip fault, and the rescheduled chip on the device side includes a second chip that recovers to a normal state after a reset.

In some possible implementations, the training system includes a training node, the training node includes the first chip and the plurality of second chips, and the fault is a fault of a target chip in the plurality of second chips.

The file synchronization module 906 is specifically configured to:
synchronize the fault file to the target chip that recovers to a normal state after a reset.

In some possible implementations, the fault is an unrecoverable node fault, and the rescheduled chip on the device side includes a newly added third chip.

In some possible implementations, the training system includes a first training node and a second training node, each training node includes at least one first chip and at least one second chip, the unrecoverable node fault occurs on the first training node, the third chip belongs to a newly added third training node, and the apparatus 900 further includes an execution result saving module 908 deployed on a first chip in the first training node and an execution result loading module 909 deployed on a first chip in the third training node.

The execution result saving module 908 is configured to save the execution result of the first subtask.

The execution result loading module 909 is configured to load the execution result of the first subtask.

The execution result saving module 908 and the execution result loading module 909 may be implemented by software or hardware. When being implemented by software, the execution result saving module 908 and the execution result loading module 909 may be application programs running on a computing device, for example, a computing engine. When being implemented by hardware, the execution result saving module 908 and the execution result loading module 909 may include at least one computing device, for example, a server. Alternatively, the execution result saving module 908 and the execution result loading module 909 may be devices implemented by an ASIC or a PLD, or the like.

In some possible implementations, the file synchronization module 906 is specifically configured to:
obtain the fault file from a memory, and synchronize the fault file to the rescheduled chip on the device side through a cluster communication interface.

In some possible implementations, the subtask is executed in a process or thread manner.

Based on the foregoing fault processing method, this application further provides a scheduler. The scheduler is used for fault processing when a fault occurs in a training system. The training system includes a first chip on a host side and a plurality of second chips on a device side. The first chip and the plurality of second chips are configured to collaboratively execute a training task. The training task includes a first subtask and a plurality of second subtasks, and execution of the second subtask depends on an execution result of the first subtask. As shown in FIG. 10, a scheduler 1000 includes:
a fault detection module 1002, configured to perform fault detection on the training system; and
a notification module 1004, configured to: when it is detected that a fault occurs, indicate the first chip to save a fault file before a second chip in a normal state on the device side stops executing the second subtask, where the fault file is synchronized by the first chip to a rescheduled chip on the device side.

For example, the fault detection module 1002 and the notification module 1004 may be implemented by hardware or software.

When being implemented by software, the fault detection module 1002 and the notification module 1004 may be application programs running on a computing device. When being implemented by hardware, the fault detection module 1002 and the notification module 1004 may include at least one computing device, for example, a server. Alternatively, the fault detection module 1002 and the notification module 1004 may also be a device implemented by an ASIC or a PLD. Alternatively, the fault detection module 1002 and the notification module 1004 may be a processing unit in the foregoing device.

In some possible implementations, the fault is a recoverable chip fault, and the scheduler 1000 further includes:
a reset module 1006, configured to reset a faulty chip on the device side.

The rescheduled chip on the device side includes a second chip that recovers to a normal state after a reset.

The reset module 1006 may be implemented by using hardware or software.

When being implemented by software, the reset module 1006 may be an application program running on a computing device. When being implemented by hardware, the reset module 1006 may include at least one computing device, for example, a server. Alternatively, the reset module 1006 may be a device implemented by an ASIC or a PLD, or the like. Alternatively, the reset module 1006 may be a processing unit in the foregoing device.

In some possible implementations, the training system includes a training node, the training node includes the first chip and the plurality of second chips, the fault is a fault of a target chip in the plurality of second chips, and the fault file is synchronized by the first chip to the target chip that recovers to a normal state after a reset.

In some possible implementations, the fault is an unrecoverable node fault, the rescheduled chip on the device side includes a newly added third chip, and the scheduler 1000 further includes:
a synchronization module 1008, configured to synchronize information about the newly added third chip to the second chip in a normal state.

Similarly, the synchronization module 1008 may be implemented by hardware or software.

When being implemented by software, the synchronization module 1008 may be an application program running on a computing device. When being implemented by hardware, the synchronization module 1008 may include at least one computing device, for example, a server. Alternatively, the synchronization module 1008 may be a device implemented by an ASIC or a PLD, or the like. Alternatively, the synchronization module 1008 may be a processing unit in the foregoing device.

In some possible implementations, the training system includes a first training node and a second training node, each training node includes at least one first chip and at least one second chip, and the unrecoverable node fault occurs on the first training node.

The synchronization module 1008 is specifically configured to:
synchronize the information about the third chip to at least one second chip in the second training node, where the information about the third chip includes at least one of address information and resource configuration information of a third training node to which the third chip belongs.

This application further provides a chip. The chip may include a processor and a storage. The storage stores computer-readable instructions, and the processor executes the computer-readable instructions to perform the fault processing method in the foregoing embodiments. For example, the chip may be a first chip, and a processor of the first chip executes computer-readable instructions to perform the fault processing method performed by the first chip in the foregoing embodiments.

This application further provides a scheduler. The scheduler may include a processor and a storage. The storage stores computer-readable instructions, and the processor executes the computer-readable instructions to perform the fault processing method performed by the scheduler in the foregoing embodiments, for example, the method in the embodiment shown in FIG. 6.

This application further provides a training system. The training system may include a first chip on a host side and a plurality of second chips on a device side. The training system may be in a single-machine multi-card architecture. That is, the training system may be one training node, for example, one training server. The training node may include one host (the host includes a first chip) and a plurality of acceleration cards (that is, second chips). The first chip on the host side and the plurality of second chips on the device side in the training node may collaboratively execute a distributed training task. In some examples, the training system may alternatively be in a multi-machine multi-card architecture. That is, the training system may be a cluster formed by a plurality of training nodes. Each of the plurality of training nodes includes a first chip on a host side and at least one second chip on a device side. A plurality of training nodes may collaboratively execute a distributed training task. The first chip in the training system is configured to execute computer-readable instructions, to perform the fault processing method in the foregoing embodiments.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct to perform the fault processing method in the foregoing embodiments.

An embodiment of this application further provides a computer program product including instructions. The computer program product may be software or a program product that includes instructions and that can be run on a computing device or be stored in any usable medium. When the computer program product runs on at least one computing device, the at least one computing device is enabled to perform the foregoing fault processing method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A fault processing method, applied to a training system, wherein the training system comprises a first chip on a host side and a plurality of second chips on a device side, the first chip and the plurality of second chips are configured to collaboratively execute a training task, the training task comprises a first subtask and a plurality of second subtasks, execution of the second subtask depends on an execution result of the first subtask, and the method comprises:
executing, by the first chip, the first subtask;
when a fault occurs, saving, by the first chip, a fault file before a second chip in a normal state on the device side stops executing the second subtask; and
synchronizing, by the first chip, the fault file to a rescheduled chip on the device side, so that the rescheduled chip continues to execute the second subtask.

2. The method according to claim 1, wherein the fault comprises a recoverable chip fault or an unrecoverable node fault.

3. The method according to claim 1 or 2, wherein the fault is a recoverable chip fault, and the rescheduled chip on the device side comprises a second chip that recovers to a normal state after a reset.

4. The method according to any one of claims 1 to 3, wherein the training system comprises a training node, the training node comprises the first chip and the plurality of second chips, and the fault is a fault of a target chip in the plurality of second chips; and
synchronizing, by the first chip, the fault file to the rescheduled chip on the device side comprises:
synchronizing, by the first chip, the fault file to the target chip that recovers to a normal state after a reset.

5. The method according to claim 1 or 2, wherein the fault is an unrecoverable node fault, and the rescheduled chip on the device side comprises a newly added third chip.

6. The method according to claim 5, wherein the training system comprises a first training node and a second training node, each training node comprises at least one first chip and at least one second chip, the unrecoverable node fault occurs on the first training node, the third chip belongs to a newly added third training node, and the method further comprises:
saving, by a first chip in the first training node, the execution result of the first subtask; and
loading, by a first chip in the third training node, the execution result of the first subtask.

7. The method according to any one of claims 1 to 6, wherein synchronizing, by the first chip, the fault file to the rescheduled chip on the device side comprises:
obtaining, by the first chip, the fault file from a memory, and synchronizing the fault file to the rescheduled chip on the device side through a cluster communication interface.

8. The method according to any one of claims 1 to 7, wherein the subtask is executed in a process or thread manner.

9. A fault processing method, applied to a scheduler, wherein the scheduler is used for fault processing when a fault occurs in a training system, the training system comprises a first chip on a host side and a plurality of second chips on a device side, the first chip and the plurality of second chips are configured to collaboratively execute a training task, the training task comprises a first subtask and a plurality of second subtasks, execution of the second subtask depends on an execution result of the first subtask, and the method comprises:
performing fault detection on the training system; and
when it is detected that a fault occurs, indicating the first chip to save a fault file before a second chip in a normal state on the device side stops executing the second subtask, wherein the fault file is synchronized by the first chip to a rescheduled chip on the device side.

10. The method according to claim 9, wherein the fault is a recoverable chip fault, and the method further comprises:
resetting a faulty chip on the device side, wherein
the rescheduled chip on the device side comprises a second chip that recovers to a normal state after a reset.

11. The method according to claim 9 or 10, wherein the training system comprises a training node, the training node comprises the first chip and the plurality of second chips, the fault is a fault of a target chip in the plurality of second chips, and the fault file is synchronized by the first chip to the target chip that recovers to a normal state after a reset.

12. The method according to claim 9, wherein the fault is an unrecoverable node fault, the rescheduled chip on the device side comprises a newly added third chip, and the method further comprises:
synchronizing information about the newly added third chip to the second chip in a normal state.

13. The method according to claim 12, wherein the training system comprises a first training node and a second training node, each training node comprises at least one first chip and at least one second chip, and the unrecoverable node fault occurs on the first training node; and
synchronizing the information about the newly added third chip to the second chip in a normal state comprises:
synchronizing the information about the third chip to at least one second chip in the second training node, wherein the information about the third chip comprises at least one of address information and resource configuration information of a third training node to which the third chip belongs.

14. The method according to any one of claims 9 to 13, wherein the subtask is executed in a process or thread manner.

15. A fault processing apparatus, wherein the apparatus is deployed on a first chip on a host side of a training system, the first chip and a plurality of second chips on a device side of the training system are configured to collaboratively execute a training task, the training task comprises a first subtask and a plurality of second subtasks, execution of the second subtask depends on an execution result of the first subtask, and the apparatus comprises:
a task execution module, configured to execute the first subtask;
a file saving module, configured to: when a fault occurs, save, by the first chip, a fault file before a second chip in a normal state on the device side stops executing the second subtask; and
a file synchronization module, configured to synchronize the fault file to a rescheduled chip on the device side, so that the rescheduled chip continues to execute the second subtask.

16. The apparatus according to claim 15, wherein the fault comprises a recoverable chip fault or an unrecoverable node fault.

17. The apparatus according to claim 15 or 16, wherein the fault is a recoverable chip fault, and the rescheduled chip on the device side comprises a second chip that recovers to a normal state after a reset.

18. The apparatus according to any one of claims 15 to 17, wherein the training system comprises a training node, the training node comprises the first chip and the plurality of second chips, and the fault is a fault of a target chip in the plurality of second chips; and
the file synchronization module is specifically configured to:
synchronize the fault file to the target chip that recovers to a normal state after a reset.

19. The apparatus according to claim 15 or 16, wherein the fault is an unrecoverable node fault, and the rescheduled chip on the device side comprises a newly added third chip.

20. The apparatus according to claim 19, wherein the training system comprises a first training node and a second training node, each training node comprises at least one first chip and at least one second chip, the unrecoverable node fault occurs on the first training node, the third chip belongs to a newly added third training node, and the apparatus further comprises an execution result saving module deployed on a first chip in the first training node and an execution result loading module deployed on a first chip in the third training node;
the execution result saving module is configured to save the execution result of the first subtask; and
the execution result loading module is configured to load the execution result of the first subtask.

21. The apparatus according to any one of claims 15 to 20, wherein the file synchronization module is specifically configured to:
obtain the fault file from a memory, and synchronize the fault file to the rescheduled chip on the device side through a cluster communication interface.

22. The apparatus according to any one of claims 15 to 21, wherein the subtask is executed in a process or thread manner.

23. A scheduler, wherein the scheduler is used for fault processing when a fault occurs in a training system, the training system comprises a first chip on a host side and a plurality of second chips on a device side, the first chip and the plurality of second chips are configured to collaboratively execute a training task, the training task comprises a first subtask and a plurality of second subtasks, execution of the second subtask depends on an execution result of the first subtask, and the scheduler comprises:
a fault detection module, configured to perform fault detection on the training system; and
a notification module, configured to: when it is detected that a fault occurs, indicate the first chip to save a fault file before a second chip in a normal state on the device side stops executing the second subtask, wherein the fault file is synchronized by the first chip to a rescheduled chip on the device side.

24. The scheduler according to claim 23, wherein the fault is a recoverable chip fault, and the scheduler further comprises:
a reset module, configured to reset a faulty chip on the device side, wherein
the rescheduled chip on the device side comprises a second chip that recovers to a normal state after a reset.

25. The scheduler according to claim 23 or 24, wherein the training system comprises a training node, the training node comprises the first chip and the plurality of second chips, the fault is a fault of a target chip in the plurality of second chips, and the fault file is synchronized by the first chip to the target chip that recovers to a normal state after a reset.

26. The scheduler according to claim 23, wherein the fault is an unrecoverable node fault, the rescheduled chip on the device side comprises a newly added third chip, and the scheduler further comprises:
a synchronization module, configured to synchronize information about the newly added third chip to the second chip in a normal state.

27. The scheduler according to claim 26, wherein the training system comprises a first training node and a second training node, each training node comprises at least one first chip and at least one second chip, and the unrecoverable node fault occurs on the first training node; and
the synchronization module is specifically configured to:
synchronize the information about the third chip to at least one second chip in the second training node, wherein the information about the third chip comprises at least one of address information and resource configuration information of a third training node to which the third chip belongs.

28. The scheduler according to any one of claims 23 to 27, wherein the subtask is executed in a process or thread manner.

29. A chip, comprising a processor and a storage, wherein the storage stores computer-readable instructions, and the processor executes the computer-readable instructions, so that the chip performs the method according to any one of claims 1 to 8.

30. A scheduler, comprising a processor and a storage, wherein the storage stores computer-readable instructions, and the processor executes the computer-readable instructions, so that the scheduler performs the method according to any one of claims 9 to 14.

31. A training system, wherein the training system comprises a first chip on a host side and a plurality of second chips on a device side, and the first chip is configured to perform the method according to any one of claims 1 to 8.

32. A computer program product, comprising computer-readable instructions, wherein the computer-readable instructions are used to implement the method according to any one of claims 1 to 14.
